# EUROPEAN PATENT SPECIFICATION

(11) **EP 2 759 004 B1**
(45) Date of publication and mention of the grant of the patent: **04.01.2017**
(21) Application number: 12773373.1
(22) Date of filing: 20.09.2012
(51) Int. Cl.: H01M 2/10, B60R 16/04, H01M 2/34

(54) **BATTERY MOUNTING STRUCTURE**
BATTERIETRÄGERSTRUKTUR
STRUCTURE DE MONTAGE DE BATTERIE

(30) Priority: 21.09.2011 JP 2011206502
(43) Date of publication of application: 30.07.2014
(73) Proprietor: TOYOTA JIDOSHA KABUSHIKI KAISHA, Toyota-shi, Aichi-ken, 471-8571 (JP)
(72) Inventor: HYODO, Hiroki, Aichi-ken, 471-8571 (JP); SIMASAKI, Osamu, Aichi-ken, 471-8571 (JP)
(74) Representative: Winter, Brandl, Fürniss, Hübner, Röss, Kaiser, Polte - Partnerschaft mbB
(86) International application number: PCT/IB2012/001832
(87) International publication number: WO 2013/041945

(56) References cited:
- EP-A1- 0 406 463
- JP-U- H 035 658
- JP-U- 61 180 454
- JP-U- H02 134 653
- US-A- 4 684 580

## Description

### BACKGROUND OF THE INVENTION

### 1. Field of the Invention

The invention relates to battery mounting structure.

### 2. Description of Related Art

Japanese Patent Application Publication No. 2003-118395 (JP 2003-118395 A) describes a battery mounting structure that prevents a battery from being damaged due to interference with a front rod that attaches the battery when the battery moves forward from inertia due to an impact from the front of a vehicle. In this related art, the front rod is able to rotate relative to a battery bracket that retains the battery. Therefore, space for the front rod to rotate must be ensured on the front side in the vehicle longitudinal direction. In addition to this, Japanese Patent Application Publication No. 2002-225750 (JP 2002-225750 A), Japanese Patent Application Publication No. 2004-142593 (JP 2004-142593 A), and Japanese Patent Application Publications No. 2004-262413 (JP 2004-262413 A), JPS61180454U and JPH02134653U also describe battery mounting structures.

### SUMMARY OF THE INVENTION

The invention provides two battery mounting structures respectively defined by independent claims 1 and 7, said structures being capable of inhibiting interference between a battery and a rod caused by inertia force acting on the battery when a frontal collision occurs, without limiting the battery arrangement.

One aspect of the invention relates to a battery mounting structure that includes a battery bracket that is fixed to a body of a vehicle, and on which a battery is mounted; a rod that is connected to the battery bracket in a state in which a gap is provided between the rod and a front wall of the battery, and that fixes the battery to the battery bracket; and an interference inhibiting portion that is provided between the rod and the front wall of the battery, and that inhibits interference between the battery and the rod by the front wall of the battery contacting the interference inhibiting portion when forward inertia force toward a front of the vehicle acts on the battery.

According to this aspect, the battery bracket on which the battery is mounted is fixed to the body of the vehicle. A rod is connected to the battery bracket, and this rod is connected to the battery bracket in a state in which a gap is provided between it (i.e., the rod) and the front wall of the battery. The battery is fixed to the battery bracket in this state.

Here, an interference inhibiting portion that inhibits interference between the battery and the rod is provided between the rod and the front wall of the battery. This interference inhibiting portion is designed so that the front wall of the battery will come into contact with it when forward inertia force acts on the battery. Therefore, it is possible to inhibit interference between the battery and the rod, and thus inhibit the battery from being damaged due to interference with the rod. The term "inhibit" in this case is intended to also include a case in which there is no interference between the front wall of the battery and the rod.

Also, the structure is not one that moves the rod in order to inhibit interference between it (i.e., the rod) and the battery, so the arrangement of the battery is not restricted, e.g., it is not necessary to ensure space to move the rod.

In this way, the aspect described above has the beneficial effect of interference between the battery and the rod due to inertia acting on the battery when a frontal collision occurs being able to be inhibited.

In the battery mounting structure according to the aspect described above, the interference inhibiting portion may be a contact portion that is fixed to the battery bracket and formed on a tray on which the battery is mounted, and that the front wall of the battery is able to come into contact with.

In this structure, the tray on which the battery is mounted is fixed to the battery bracket. Also, the interference inhibiting portion is a contact portion that is formed on the tray, and the front wall of the battery is able to come into contact with this contact portion when forward inertia force toward the front of the vehicle acts on the battery. That is, here, the contact portion is formed on the tray, so a mounting structure can be realized that has the beneficial effect of being able to inhibit interference between the battery and the rod by a simpler structure than one in which the tray is formed separate from the contact portion and then joined to the tray by welding or adhesion or the like.

In this way, a mounting structure that has a beneficial effect is able to be realized by a simple structure in which a contact portion is simply formed on a tray.

In this structure, the tray may be made of resin, a flange portion may be provided standing erect on a peripheral edge portion of the tray that is plate-shaped, and the contact portion extends toward a front wall of the battery. Said contact portion may be a plurality of ribs that extend toward the front wall of the battery from an inside wall surface of the flange portion, and are provided at intervals in a width direction of the battery.

That is, the peripheral edge portion of the tray is surrounded by the flange portion, so even if the battery were to leak battery fluid, the leaked battery fluid would be able to be collected by the tray.

Also, the plurality of ribs extend toward the front wall of the battery from the inside wall surface of the flange portion, and are provided at intervals in a width direction of the battery. The front wall of the battery is able to contact these ribs. As a result, when forward inertia force toward the front of the vehicle acts on the battery as a result of a frontal collision of the vehicle, the front wall of the battery will contact the tip end surfaces of the ribs, thereby inhibiting interference between the battery and the rod, and impact energy from the frontal collision of the vehicle is able to be absorbed by deformation (elastic deformation and plastic deformation) of the ribs.

Also, by having the ribs extend toward the front wall side of the battery from the inside wall surface of the flange of the tray, the ribs will not become undercut portions during mold release in a mold that forms the tray, so the ribs and the tray are able to be integrally formed.

The battery mounting structure having this structure has the beneficial effects of inhibiting interference between the battery and the rod, being able to absorb impact energy from a frontal collision of the vehicle, and being able to have the tray and the contact portion be integrally formed.

Moreover, the rod may be a J-bolt, and one end portion of the J-bolt may be retained in a hole formed in the battery bracket that is made of metal.

Typically, the J-bolt is made of metal. For example, when a hole is provided in the resin tray, and one end portion of the J-bolt is hooked into this hole, the hole may be damaged by axial force acting on the J-bolt when the other end portion of the J-bolt is fastened to the fixing plate. However, the hole is formed in the metal battery bracket and the one end portion of the J-bolt is retained in this hole, so this kind of problem is inhibited.

The battery mounting structure having this structure has the beneficial effect of good assemblability compared with a case in which one end portion of the rod is fastened to the battery bracket in a narrow space, because one end portion of the J-bolt is simply hooked onto the battery bracket using the J-bolt as the rod.

With the aspect described above, the interference inhibiting portion may be a contact piece that is welded to the rod, and that the front wall of the battery is able to come into contact with.

In this structure, the interference inhibiting portion is a contact piece that is welded to the rod. The front wall of the battery is able to come into contact with this contact piece when forward inertia force toward the front of the vehicle acts on the battery. That is, this structure inhibits interference between the battery and the rod.

The battery mounting structure having this structure has the beneficial effect of a conventional part being able to be used as it is for the rod, because the contact piece is simply welded to the rod.

The contact piece may be arranged with a gap between the rod and the contact piece, and may include an abutting surface portion that the front wall of the battery is able to come into contact with, and a pair of mounting leg portions that support the abutting surface portion, and end portions of which are welded to the rod.

With this structure, the abutting surface portion is provided on the contact piece, and the front wall of the battery is able to come into contact with this abutting surface portion when forward inertia force toward the front of the vehicle acts on the battery. That is, this structure inhibits interference between the battery and the rod.

Also, the abutting surface portion is supported, in a state arranged with a gap between it and the rod, by the pair of mounting leg portions with the end portions that are welded to the rod. Therefore, if forward inertia force toward the front of the vehicle acts on the battery as a result of a frontal collision of the vehicle, and the abutting surface portion is consequently pushed on while the front wall of the battery is contacting the abutting surface portion, the mounting leg portions will deform (i.e., elastically deform and plastic deform), and impact energy from the frontal collision of the vehicle will be absorbed. In this way, a stroke for absorbing the impact load can be ensured by providing the gap between the abutting surface portion and the rod.

The battery mounting structure according to this structure has the beneficial effects of inhibiting interference between the battery and the rod, and absorbing impact energy from a frontal collision of the vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view of a battery mounting structure according to one example embodiment of the invention;
FIG. 2 is a sectional view of the battery mounting structure according to the example embodiment of the invention;
FIG. 3 is an enlarged sectional view of a main portion of the battery mounting structure that is denoted as portion A in FIG. 2;
FIG. 4 is a perspective view of a tray that forms a portion of the battery mounting structure according to the example embodiment of the invention;
FIG. 5A is a plan view of the tray shown in FIG. 4;
FIG. 5B is a modified example of the tray shown in FIG. 5A;
FIG. 6A is an enlarged perspective view of another mode of the main portion of the battery mounting structure according to the example embodiment; and
FIG. 6B is a sectional view of the main portion shown in FIG. 6A.

### DETAILED DESCRIPTION OF EMBODIMENTS

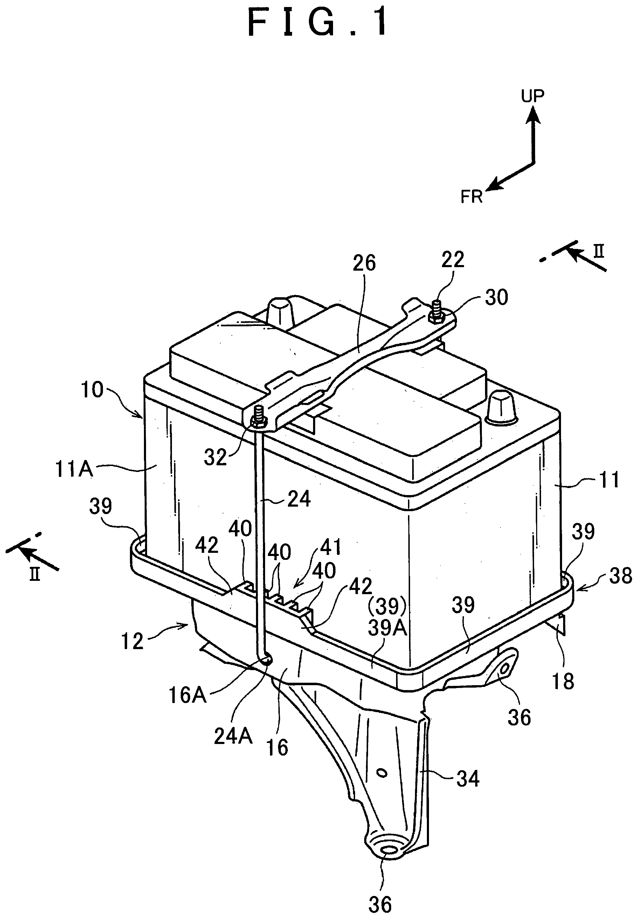

Next, the battery mounting structure according to an example embodiment of the invention will be described with reference to FIGS. 1 to 4. In the drawings, arrow FR indicates a direction toward the front of the vehicle, and arrow UP indicates an upward direction with respect to the vehicle. Hereinafter, the terms front and rear will refer to the front and rear, respectively, in the vehicle longitudinal direction, and the terms up or upper and down or lower will refer to the upper and lower directions, respectively, in the vehicle vertical direction.

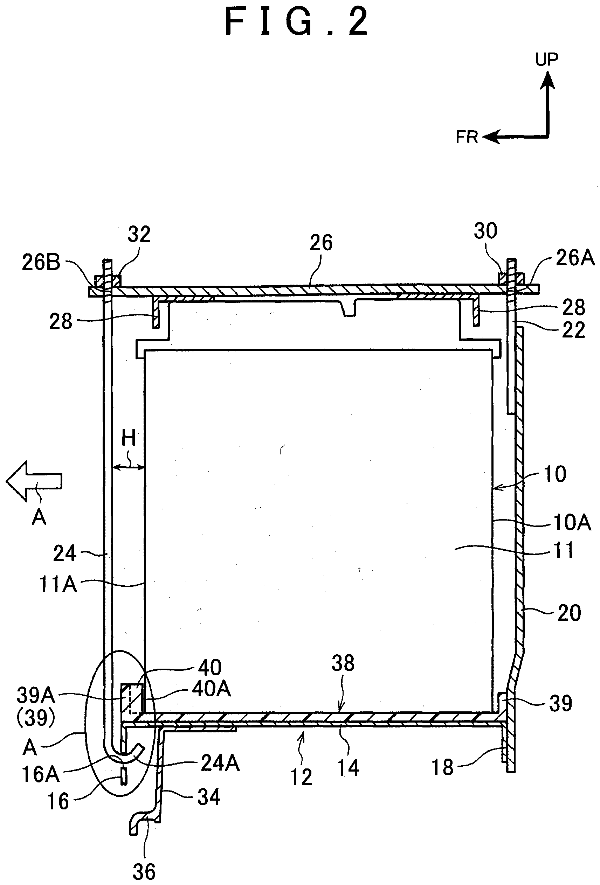

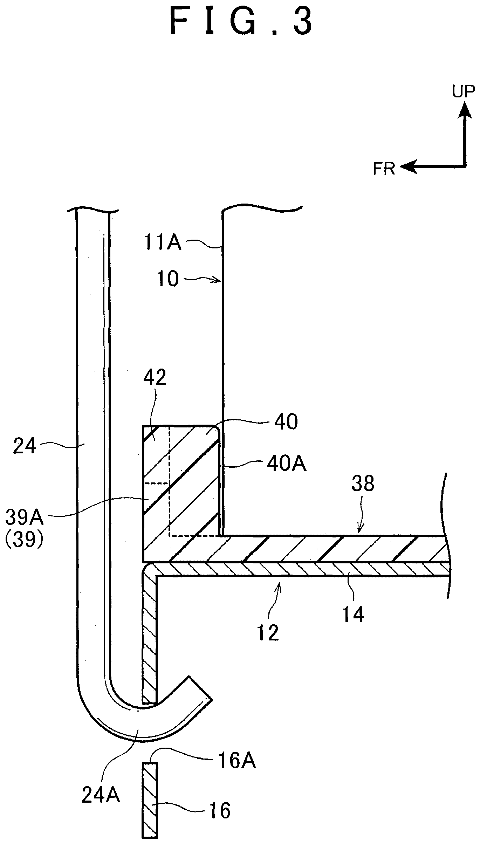

FIG. 1 is a perspective view, as viewed diagonally from the front and above at an angle, of a tray 38 and a battery 10 and the like to which the battery mounting structure according to this example embodiment has been applied. FIG. 2 is a sectional view taken along line II - II in FIG. 1, and FIG. 3 is an enlarged sectional view of portion A shown in FIG. 2.

As shown in FIGS. 1 and 2, the battery 10 is formed in a generally rectangular parallelepiped shape, and is retained by a battery bracket 12 that is made of sheet metal. The battery bracket 12 forms a mount 14. The sectional shape of this mount 14 is a rectangular wavy shape that is open downward. The battery 10 is mounted onto this mount 14 (this will be described later). Here, the battery 10 is not necessarily arranged such that a side wall 11 thereof extends in a vehicle width direction or a vehicle longitudinal direction, but for the sake of simplifying the description, it will be described as being arranged with the side wall 11 thereof extending in the vehicle longitudinal direction.

An attaching piece 16 is provided on a front end portion of the mount 14, and an attaching piece 18 is provided on a rear end portion of the mount 14. A clamp 20 is fixed to this attaching piece 18 in a position corresponding to a center portion, in the vehicle width direction, of the battery 10 that is mounted onto the mount 14. The clamp 20 is made of generally rectangular-shaped sheet metal and is fixed to the attaching piece 18 by welding or the like. Also, the clamp 20 is arranged extending in the vehicle height direction of the battery 10, and an end portion (a lower end portion) of a rear rod 22 is fixed to an upper end portion of the clamp 20 by welding or the like.

Also, a hole 16A is provided in the attaching piece 16 in a position corresponding to a center portion, in the vehicle width direction, of the battery 10 that is mounted onto the mount 14. As shown in FIG. 3, a hook portion 24A that is provided on one end portion (a lower end portion) of a J-bolt 24 (rod) is inserted into this hole 16A. With this hook portion 24A inserted into the hole 16A, the hook portion 24A catches on an inside edge portion of the hole 16A and is thus retained.

Meanwhile, a fixing plate 26 that is formed in a rectangular shape is arranged extending in the vehicle longitudinal direction, on an upper surface of the battery 10. A movement restricting piece 28 that has a generally L-shaped cross-section is provided on both end sides of the fixing plate 26 in the longitudinal direction. These movement restricting pieces 28 restrict movement of a predetermined value or more of the battery 10 in the vehicle longitudinal direction.

A through-hole 26A is formed in a rear end portion of the fixing plate 26. The other end portion of the rear rod 22 that is fixed to the upper end portion of the clamp 20 is inserted into this through-hole 26A. With the other end portion (i.e., the upper end portion) of the rear rod 22 inserted into this through-hole 26A, a nut 30 is fastened onto the other end portion of the rear rod 22.

Also, a through-hole 26B is formed in a front end portion of the fixing plate 26. The other end (i.e., the upper end portion) of the J-bolt 24 is able to be inserted into this through-hole 26B. After the nut 30 is fastened onto the other end portion of the rear rod 22, the other end portion of the J-bolt 24 is inserted into the through-hole 26B and a nut 32 is then fastened onto the other end portion of the J-bolt 24.

In this way, with the nuts 30 and 32 fastened, the battery 10 is held to the mount 14 in a state sandwiched between the fixing plate 26 and the mount 14 (i.e., the battery bracket 12) via the J-bolt 24 and the rear rod 22.

Meanwhile, a fixing piece 34 that has a generally L-shaped cross-section is fixed to the front side of the mount 14 by welding or the like. A fastening portion 36 is provided on this fixing piece 34, and a bolt, not shown, is able to be fastened by this fastening portion 36. The battery bracket 12 is fixed to a body side, not shown, via this bolt.

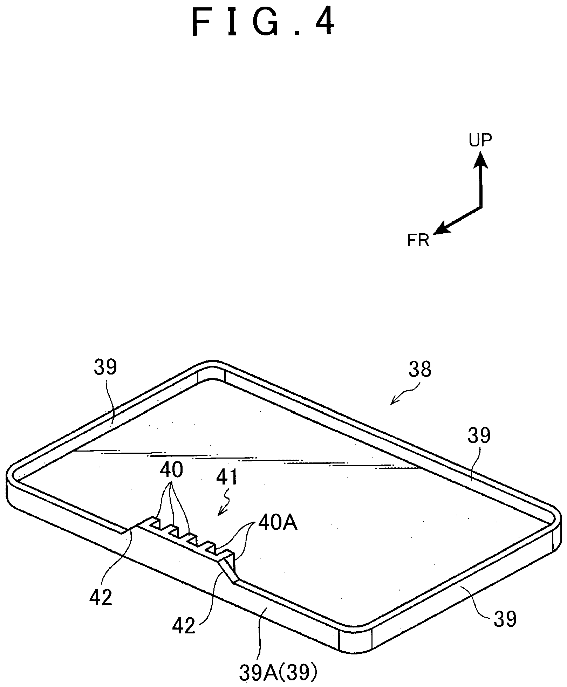

Here, the tray 38 made of resin is attached to the mount 14, and the battery 10 is mounted on this tray 38. FIG. 4 is a perspective view of the tray 38 viewed diagonally from the front and above at an angle. As shown in FIG. 4, the tray 38 has a generally rectangular shape, and a flange portion 39 that stands erect rising upward is formed on a peripheral edge portion of the tray 38. This flange portion 39 is provided extending along in the vehicle width direction and in the vehicle longitudinal direction.

Also, as shown in FIG. 2, an outer dimension of a side wall 11 of the battery 10 is set to be slightly smaller than an inner dimension between flange portions 39 that are arranged opposite one another. Therefore, when the battery 10 is mounted on the tray 38, there is a gap between a front wall 11A of the battery 10 and the flange portion 39 of the tray 38.

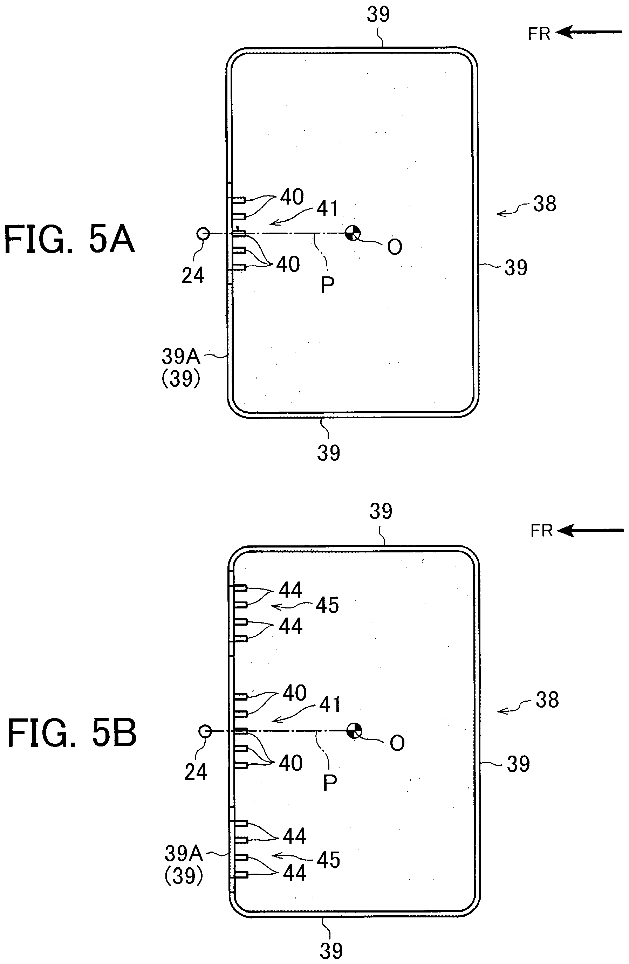

FIG. 5 is a plan view of the tray 38. As shown in FIG. 5, ribs (contact portions) 40 that serve as an interference inhibiting portion extend toward the rear from an inside wall of the center portion, in the vehicle width direction, of a flange portion 39A arranged on the front side. These ribs 40 have generally rectangular shapes and are provided in plurality (five in this case) in the vehicle width direction (forming a rib group 41). The rib 40 positioned in the center of this rib group 41 is arranged on a straight line P that connects the location of the center of gravity O of the battery 10 with the J-bolt 24. The ribs 40 are formed parallel to one another.

Also, as shown in FIG. 2, the extension length of the ribs 40 is set such that a gap is provided between tip end surfaces 40A of the ribs 40 and the front wall 11 A of the battery 10. Further, the height of the ribs 40 is set to approximately two times the height of the flange portion 39A in this case. Also, as shown in FIG. 4, inclined walls 42 are provided at base portions (i.e., portions of the flange portion 39A) of the ribs 40 that are arranged on the outside in the vehicle width direction, from among the plurality of ribs 40 that are provided. Upper end surfaces of the base portions of the ribs 40 are connected to an upper end surface of the flange portion 39A by the inclined walls 42.

Next, the operation and effect of the battery mounting structure according to this example embodiment will be described.

In this example embodiment, as shown in FIG 2, a gap H is provided between the J-bolt 24 and the front wall 11A of the battery 10 while the battery 10 is fixed sandwiched between the fixing plate 26 and the mount 14. Meanwhile, the plurality of ribs 40 (i.e., the rib group 41) extend toward the rear from the inside wall of the center portion, in the vehicle width direction, of the flange portion 39A arranged on the front side of the tray 38.

That is, the ribs 40 and the flange portion 39A of the tray 38 are arranged between the J-bolt 24 and the front wall 11 A of the battery 10. When inertia force is applied toward the front of the vehicle (i.e., in the direction of arrow A; hereinafter this inertia force will simply be referred to as "forward inertia force") to the battery 10 as a result of a frontal collision of the vehicle or the like, the front wall 11 A of the battery 10 comes into surface contact with the tip end surfaces 40A of the plurality of ribs 40.

If the ribs 40 were not provided on the tray 38, for example, only the flange portion 39A of the tray 38 would be arranged between the J-bolt 24 and the front wall 11A of the battery 10 (this case is not shown). Therefore, when forward inertia force is applied (i.e., in the direction of arrow A) to the battery 10 as a result of a frontal collision of the vehicle or the like, the front wall 11A of the battery 10 comes into surface contact with the flange portion 39A of the tray 38. At this time, if the flange portion 39A were inclined toward the front side, then the battery 10 would ride over the tray 38 along the inclined surface of the inclined flange portion 39A, and the front wall 11A of the battery 10 may end up interfering (i.e., colliding) with the J-bolt 24.

However, in this example embodiment, the plurality of ribs 40 are provided on the inside wall of the flange portion 39A that is arranged on the front side of the tray 38, so the strength of the tray 38 itself is able to be increased. As a result, deformation of the tray is inhibited, so the flange portion 39A is able to be prevented from slanting. That is, when forward inertia force acts on the battery 10, the battery 10 moves forward (i.e., in the direction of arrow A). However, the ribs 40 extend toward the rear from the inside wall of the flange portion 39A, so the front wall 11 A of the battery 10 comes into surface contact with the tip end surfaces 40A of the plurality of ribs 40.

In this way, interference between the battery 10 and the J-bolt 24 is inhibited by the front wall 11 A of the battery 10 coming into surface contact with the ribs 40. Therefore, damage to the battery 10 due to interference with the J-bolt 24 is able to be inhibited. Also, because the front wall 11 A of the battery 10 comes into surface contact with the tip end surfaces 40A of the ribs 40, the contact area between the ribs 40 and the front wall 11 A of'the battery 10 is able to be larger than it is when the front wall 11A of the battery 10 comes into line contact with the ribs 40. As a result, the surface pressure at the contact surfaces of the ribs 40 and the front wall 11 A of the battery 10 can be decreased, so the load received by the battery 10 can be reduced.

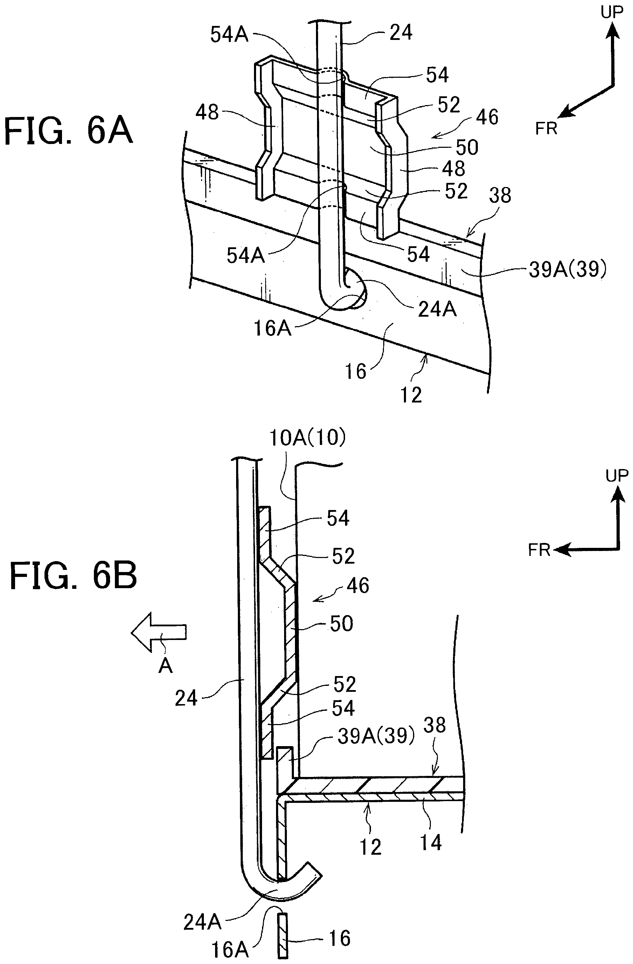

Here, a case in which the front wall 11A of the battery 10 comes into surface contact with the ribs 40 is described. However, interference between the battery 10 and the J-bolt 24 need only be inhibited, so the front wall 11 A of the battery 10 need only be able to come into contact with the ribs 40. Therefore, a structure in which the front wall 11 A of the battery 10 comes into line contact with the ribs 40 may also be employed. Also, the front wall 11 A of the battery 10 may also come into line contact with a patch 46 (see FIG. 6) or the like that will be described later as a modified example of the ribs 40, just as it does with the ribs 40.

Also, in this example embodiment, the structure is not one that moves the J-bolt 24 in order to inhibit interference between the battery 10 and the J-bolt 24, so the arrangement of the battery 10 is not restricted, e.g., it is not necessary to ensure space to move the J-bolt 24.

That is, according to the structure described above, interference between the battery 10 and the J-bolt 24 due to inertia of the battery 10 is able to be inhibited without the arrangement of the battery 10 being restricted by restrictions such as those described above. The term "inhibit" in this case is intended to also include a case in which there is no interference between the front wall 11A of the battery 10 and the J-bolt 24.

Also, as shown in FIG. 1, the peripheral edge portion of the tray 38 is surrounded by the flange portions 39, so even if the battery 10 were to leak battery fluid, the leaked battery fluid would be able to be collected by the tray 38.

Also in this example embodiment, as shown in FIG 2, the ribs 40 that serve as the interference inhibiting portion are formed on the inside wall surface of the flange portion 39A that is positioned on the front side of the tray 38. Accordingly, when forward inertia force acts on the battery 10 as a result of a frontal collision of the vehicle, the front wall 11A of the battery 10 comes into surface contact with the tip end surfaces 40A of the ribs 40, and the ribs 40 deform (i.e., elastically deform and plastic deform). The impact energy from the frontal collision of the vehicle is able to be absorbed by this deformation of the ribs 40. The amount of impact energy that is absorbed can be adjusted according to the height and width and the like of the ribs 40. In this example embodiment, the height of the ribs 40 is approximately two times the height of the flange portion 39A, but the height of the ribs 40 may also be equal to the height of the flange portion 39A or higher than the height of the flange portion 39A.

Meanwhile, as shown in FIG. 5A, the rib 40 that is positioned in the center of the rib group 41 is arranged on the straight line P that connects the location of the center of gravity O of the battery 10 with the J-bolt 24, and the ribs 40 are formed parallel to one another. That is, these ribs 40 are arranged in the direction in which the battery 10 will move, so impact energy from a frontal collision of the vehicle is able to be efficiently absorbed.

In this way, interference between the battery 10 and the J-bolt 24 is able to be inhibited by forming the ribs 40 on the tray 38, and thus is able to be realized by a simpler structure than one in which the contact portion that the front wall 11A of the battery 10 comes into surface contact with is formed separate from the tray 38 and then joined to the tray 38 by welding or adhesion or the like.

Also, in this example embodiment, the ribs 40 extend toward the front wall 11 A side of the battery 10 from the inside wall surface of the flange portion 39A of the tray 38. Therefore, the ribs 40 will not become undercut portions during mold release in a mold that forms the tray 38, so the ribs 40 and the tray 38 are able to be integrally formed.

Typically, the J-bolt 24 is made of metal. For example, a hole, not shown, is provided in the resin tray 38, and the hook portion 24A that is positioned on one end portion of the J-bolt 24 is hooked into this hole. In this case, when fastening the other end portion of the J-bolt 24 to the fixing plate 26, the hole may be damaged by axial force acting on the J-bolt 24. However, in this example embodiment, the hole 16A is provided in the attaching piece 16 that is provided on the battery bracket 12 made of sheet metal, and the hook portion 24A of the J-bolt 24 is retained in this hole 16A. Therefore, this kind of problem is inhibited.

Also, by using the J-bolt 24 as a rod, the hook portion 24A of the J-bolt 24 is simply hooked into the hole 16A when attaching the battery 10, so assemblability is better than it is when fastening one end portion of the rod to the battery bracket in a narrow space, which is not shown. A rod other than the J-bolt 24 may of course also be used.

In this example embodiment, as shown in FIG. 5A, the plurality of ribs 40 (i.e., the rib group 41) are provided in the center portion, in the vehicle width direction, of the flange portion 39A that is positioned on the front side of the tray 38. In other words, the ribs 40 are provided in positions opposite to the J-bolt 24. However, this rib group 41 is not limited to being in the center portion of the flange portion 39A in the vehicle width direction.

For example, as shown in FIG. 5B, rib groups 45, each of which is formed by a plurality of ribs 44, may also be arranged one on each side, in the vehicle width direction, of the rib group 41 that is arranged in the center portions, in the vehicle width direction, of the flange portion 39A, in a manner sandwiching the straight line P. In this case, a plurality of ribs 44 are provided, but of course it is also possible to provide only one. Further, the rib groups 45 may be provided on both sides, in the vehicle width direction, of the flange portion 39, and the rib group 41 may be omitted.

In this way, by providing the ribs 44 (i.e., the rib groups 45) other than the ribs 40 (i.e., the rib group 41) that are arranged in positions opposite to the J-bolt 24, the front wall 11 A of the battery 10 is able to come into surface contact with the ribs 40 and the ribs 44. Therefore, impact energy from a frontal collision of the vehicle is able to be absorbed by the ribs 44 as well. In this case, the extension length of the ribs 44 may be set longer than that of the ribs 40 so that impact energy is absorbed by the rib groups 45 before it is absorbed by the rib group 41.

In the example embodiment described above, a case is described in which the front wall 11A of the battery 10 is arranged extending in the vehicle width direction. However, the front wall 11 A of the battery 10 may also be arranged at an angle with respect to the vehicle width direction or the vehicle longitudinal direction. In this case, when forward inertia force acts on the battery 10 as a result of a frontal collision of the vehicle, the front wall 11 A of the battery 10 tries to come into surface contact with the flange portion 39A of the tray 38 while at an angle to the flange portion 39A.

Therefore, as shown in FIG. 5B, the rib groups 45 may be provided one on each side of the rib group 41 in the vehicle width direction, sandwiching the straight line. With this structure, the front wall 11A of the battery 10 will at least abut against the ribs 44 that form the rib groups 45, even when the front wall 1A of the battery 10 comes in surface contact with the flange portion 39A of the tray 38 while at an angle to the flange portion 39A. As a result, impact energy is able to be absorbed.

Also, as shown in FIG. 5A, a plurality of the ribs 40 are provided in the vehicle width direction and extending from the inside wall of the flange portion 39A of the tray 38, but because the front wall 11A of the battery 10 only needs to come into surface contact, the shape of the ribs is not limited to this. For example, although not shown, a connecting rib that connects the tip end portions of the ribs 40 together is provided and this connecting rib is formed parallel to the flange portion 39A. Accordingly, the contact area with the front wall 11 A of the battery 10 can be increased, so the surface pressure at the contact surfaces of the connecting rib and the front wall 11 A of the battery 10 can be decreased, so the load received by the battery 10 can be reduced.

Also, aside from this, although not shown, a connecting rib that connects the tip end portions of the ribs 40 that extend in the vehicle longitudinal direction may be provided, and a slanted rib that connects the base portion of one rib 40 to the tip end portion of another rib 40 that is adjacent to that rib 40 may be provided. This slanted rib may be formed between the adjacent ribs 40, so as to form a triangular shape in which the rear side is the apex portion.

Also in this example embodiment, the inclined walls 42 are provided on the base portions of the ribs 40 that are arranged on the outside, and the upper end surface on the base portion side of the ribs 40 is connected to the upper end surface of the flange portion 39A by these inclined walls 42. However, these inclined walls 42 do not necessarily have to be provided.

In the example embodiment described above, interference between the battery 10 and the J-bolt 24 is inhibited by providing the plurality of ribs 40 on the inside wall of the flange portion 39A that is positioned on the front side of the tray 38, as shown in FIG. 2. However, the structure is not limited to this as long as interference between the battery 10 and the J-bolt 24 is able to be inhibited.

For example, as shown in FIGS. 6A and 6B, a patch 46 that functions as a contact piece with which the front wall 11 A of the battery 10 is able to come into surface contact may be welded to the J-bolt 24. This patch 46 has a rectangular shape, and a bent piece 48 that is bent toward the front side (i.e., the J-bolt 24 side) is provided on each of both end portions of the patch 46 in the vehicle width direction. These bent pieces 48 increase the rigidity and strength of the patch 46.

An abutting surface portion 50 is provided on the center portion of the patch 46. The front wall 11A of the battery 10 is able to come into surface contact with this abutting surface portion 50 when forward inertia force acts on the battery 10 as a result of a frontal collision of the vehicle. That is, interference between the battery 10 and the J-bolt 24 is inhibited by the front wall 11A of the battery 10 coming into surface contact with this abutting surface portion 50.

Further, an inclined piece 52 that forms a portion of a mounting leg portion and that is inclined in a direction in which it comes closer to the J-bolt 24 farther up or farther down, is provided on each of both end portions of the abutting surface portion 50 in the vehicle vertical direction. A welding piece 54 that forms a portion of the mounting leg portion and that is bent upward or downward is formed on an end portion of this inclined piece 52. This welding piece 54 abuts against the J-bolt 24. An arc-shaped welding portion 54A that has a curvature radius substantially the same as the outer diameter dimension of the J-bolt 24 is provided on the center portion of the welding piece 54 in the vehicle width direction. This welding portion 54A is welded to an outer peripheral surface of the J-bolt 24. In this way, the area of the abutting surface portion 50 is ensured by keeping the welding locations as few as possible. In this example embodiment, the patch 46 is simply welded to the J-bolt 24, so a conventional part can be used as it is for the J-bolt 24.

Also, here, the inclined piece 52 is provided on the patch 46 and a gap is provided between the abutting surface portion 50 and the J-bolt 24. Therefore, if inertia force in a horizontal direction (i.e., the direction of arrow A) acts on the battery 10 as a result of a frontal collision of the vehicle, and the abutting surface portion 50 is consequently pushed on by the front wall 11A of the battery 10, the inclined piece 52 will deform (i.e., elastically deform and plastic deform). As a result, impact energy from the frontal collision of the vehicle can be absorbed. In this way, a stroke for absorbing the impact load can be ensured by providing the gap between the abutting surface portion 50 and the J-bolt 24.

Here, the inclined piece 52 is provided as a member that forms a portion of the mounting leg portion. However, it is sufficient to just have the gap be provided between the abutting surface portion 50 and the J-bolt 24, so the piece does not necessarily have to be an inclined piece. For example, the member that forms a portion of the mounting leg portion may also be a leg piece that is arranged orthogonal to the abutting surface portion 50 and the J-bolt 24.

While the invention has been described with reference to example embodiments thereof, it should be understood that the invention is not limited to the example embodiments. The invention may of course be carried out in other modes that have been modified or improved in any of a variety of ways without departing from the scope thereof.

## Claims

1. A battery mounting structure comprising:
a battery bracket (12) that is fixed to a body of a vehicle, and on which a battery (10) is mounted;
a rod that is connected to the battery bracket in a state in which a gap is provided between the rod and a front wall (11 A) of the battery, and that fixes the battery to the battery bracket; and **characterized by**
an interference inhibiting portion that is provided between the rod and the front wall of the battery, and that inhibits interference between the battery and the rod by the front wall of the battery contacting the interference inhibiting portion when forward inertia force toward a front of the vehicle acts on the battery,
wherein the interference inhibiting portion is a contact portion formed on a tray that forms a portion of the battery mounting structure,
wherein the contact portion extends toward the front wall of the battery,
wherein the battery is mounted on the tray, and
wherein the front wall of the battery is able to come into contact with the contact portion.

2. The battery mounting structure according to claim 1,
wherein the tray is made of resin,
wherein a flange portion (39) stands erect on a peripheral edge portion of the tray that is plate-shaped,
wherein the contact portion is a plurality of ribs (40) that extend toward the front wall of the battery from an inside wall surface of the flange portion, and
wherein the plurality of the ribs are provided at intervals in a width direction of the battery.

3. The battery mounting structure according to claim 2, wherein the ribs are provided in positions opposite to the rod.

4. The battery mounting structure according to claim 2 or 3, wherein the ribs are provided on both sides so as to sandwich a position opposite to the rod.

5. The battery mounting structure according to any one of claims 2 to 4, wherein a height of the ribs is higher than a height of the flange portion.

6. The battery mounting structure according to claim 2, wherein the rod is a J-shaped bolt (24), and one end portion of the J-shaped bolt is retained in a hole (16A) formed in the battery bracket that is made of metal.

7. A battery mounting structure comprising:
a battery bracket (12) that is fixed to a body of a vehicle, and on which a battery (10) is mounted;
a rod that is connected to the battery bracket in a state in which a gap is provided between the rod and a front wall (11 A) of the battery, and that fixes the battery to the battery bracket; and **characterized by** an interference inhibiting portion that is provided between the rod and the front wall of the battery, and that inhibits interference between the battery and the rod by the front wall of the battery contacting the interference inhibiting portion when forward inertia force toward a front of the vehicle acts on the battery,
wherein the interference inhibiting portion is a contact piece (46) that is welded to the rod, and
wherein the front wall of the battery is able to come into contact with the contact piece.

8. The battery mounting structure according to claim 7,
wherein the contact piece includes an abutting surface portion (50) that the front wall of the battery is able to come into contact with, and a pair of mounting leg portions that support the abutting surface portion, and end portions of which are welded to the rod,
and wherein a gap is provided between the abutting surface portion and the rod.

## Patentansprüche

1. Batterieträgerstruktur, mit:
einer Batteriehalterung (12), die an einer Fahrzeugkarosserie befestigt ist, und auf der eine Batterie (10) montiert ist;
einer Stange, die mit der Batteriehalterung derart verbunden ist, dass ein Spalt zwischen der Stange und einer vorderen Wand (11A) der Batterie vorhanden ist, und die die Batterie an der Batteriehalterung befestigt; und
**gekennzeichnet durch**
einen Beeinträchtigungsverhinderungsabschnitt, der zwischen der Stange und der vorderen Wand der Batterie vorhanden ist, und der eine Beeinträchtigung zwischen der Batterie und der Stange **dadurch** verhindert, dass die vordere Wand der Batterie mit dem Beeinträchtigungsverhinderungsabschnitt in Kontakt gelangt, wenn eine in Richtung einer Fahrzeugfront nach vorne wirkende Trägheitskraft auf die Batterie einwirkt,
wobei der Beeinträchtigungsverhinderungsabschnitt ein Kontaktabschnitt ist, der auf einer Ablageschale ausgebildet ist, die einen Abschnitt der Batterieträgerstruktur ausbildet,
wobei sich der Kontaktabschnitt in Richtung der vorderen Wand der Batterie erstreckt,
wobei die Batterie auf der Ablageschale befestigt ist, und
wobei die vordere Wand der Batterie dazu fähig ist, mit dem Kontaktabschnitt in Kontakt zu kommen.

2. Batterieträgerstruktur gemäß Anspruch 1,
wobei die Ablageschale aus Harz hergestellt ist,
wobei ein Flanschabschnitt (39) aufrecht auf einem Umfangskantenabschnitt der Ablageschale steht, die plattenförmig ist,
wobei der Kontaktabschnitt durch eine Mehrzahl an Rippen (40) ausgebildet ist, die sich von einer Innenwandoberfläche des Flanschabschnitts in Richtung der vorderen Wand der Batterie erstrecken, und
wobei die Mehrzahl der Rippen in einer Breitenrichtung der Batterie zueinander beabstandet vorhanden sind.

3. Batterieträgerstruktur gemäß Anspruch 2, wobei die Rippen an Positionen vorhanden sind, die der Stange gegenüberliegen,.

4. Batterieträgerstruktur gemäß Anspruch 2 oder 3, wobei die Rippen zu beiden Seiten einer Position angeordnet sind, die der Stange gegenüberliegt.

5. Batterieträgerstruktur gemäß einem der Ansprüche 2 bis 4, wobei die Höhe der Rippen größer ist als die Höhe des Flanschabschnitts.

6. Batterieträgerstruktur gemäß Anspruch 2, wobei die Stange ein J-förmiger Bolzen (24) ist, und ein Endabschnitt des J-förmigen Bolzens in einem Loch (16A) gehalten ist, welches in der aus Metall hergestellten Batteriehalterung ausgebildet ist.

7. Batterieträgerstruktur, mit:
einer Batteriehalterung (12), die an einer Fahrzeugkarosserie befestigt ist, und auf der eine Batterie (10) montiert ist;
einer Stange, die mit der Batteriehalterung derart verbunden ist, dass ein Spalt zwischen der Stange und einer vorderen Wand (11A) der Batterie vorhanden ist, und die die Batterie an der Batteriehalterung befestigt; und
**gekennzeichnet durch**
einen Beeinträchtigungsverhinderungsabschnitt, der zwischen der Stange und der vorderen Wand der Batterie vorhanden ist, und der eine Beeinträchtigung zwischen der Batterie und der Stange **dadurch** verhindert, dass die vordere Wand der Batterie mit dem Beeinträchtigungsverhinderungsabschnitt in Kontakt gelangt, wenn eine in Richtung einer Fahrzeugfront nach vorne wirkende Trägheitskraft auf die Batterie einwirkt,
wobei der Beeinträchtigungsverhinderungsabschnitt ein Kontaktstück (46) ist, welches an die Stange geschweißt ist, und
wobei die vordere Wand der Batterie dazu fähig ist, mit dem Kontaktstück in Kontakt zu kommen.

8. Batterieträgerstruktur gemäß Anspruch 7,
wobei das Kontaktstück einen Anstoßoberflächenabschnitt (50), mit dem die vordere Wand der Batterie fähig ist, in Kontakt zu kommen, und ein Paar Befestigungsbeinabschnitte aufweist, die den Anstoßoberflächenabschnitt stützen und deren Endabschnitte an die Stange geschweißt sind,
und wobei ein Spalt zwischen dem Anstoßoberflächenabschnitt und der Stange vorhanden ist.

## Revendications

1. Structure de montage de batterie :
un support de batterie (12) qui est fixé sur une carrosserie d'un véhicule, et sur lequel une batterie (10) est montée ;
une tige qui est reliée au support de batterie dans un état dans lequel un espace est prévu entre la tige et une paroi avant (11A) de la batterie, et qui fixe la batterie sur le support de batterie ; et
**caractérisée par**
une partie d'inhibition d'interférence qui est prévue entre la tige et la paroi avant de la batterie, et qui empêche une interférence entre la batterie et la tige par la paroi avant de la batterie qui entre en contact avec la partie d'inhibition d'interférence quand une force d'inertie avant vers l'avant du véhicule agit sur la batterie,
dans laquelle la partie d'inhibition d'interférence est une partie de contact formée sur un plateau qui forme une partie de la structure de montage de batterie,
dans laquelle la partie de contact s'étend vers la paroi avant de la batterie,
dans laquelle la batterie est montée sur le plateau, et
dans laquelle la paroi avant de la batterie peut venir en contact avec la partie de contact.

2. Structure de montage de batterie selon la revendication 1,
dans laquelle le plateau est fabriqué en résine, dans laquelle une partie de bride (39) se dresse sur une partie de bord périphérique du plateau qui est en forme de plaque,
dans laquelle la partie de contact est une pluralité de nervures (40) qui s'étendent vers la paroi avant de la batterie depuis une surface de paroi intérieure de la partie de bride, et
dans laquelle la pluralité de nervures est prévue à des intervalles dans une direction de largeur de la batterie.

3. Structure de montage de batterie selon la revendication 2, dans laquelle les nervures sont prévues dans des positions opposées à la tige.

4. Structure de montage de batterie selon la revendication 2 ou 3, dans laquelle les nervures sont prévues des deux côtés de façon à enserrer une position opposée à la tige.

5. Structure de montage de batterie selon l'une quelconque des revendications 2 à 4, dans laquelle une hauteur des nervures est plus grande qu'une hauteur de la partie de bride.

6. Structure de montage de batterie selon la revendication 2, dans laquelle la tige est un boulon en forme de J (24), et une partie d'extrémité du boulon en forme de J est maintenue dans un trou (16A) formé dans le support de batterie qui est fabriqué en métal.

7. Structure de montage de batterie comportant :
un support de batterie (12) qui est fixé sur une carrosserie d'un véhicule, et sur lequel une batterie (10) est montée ;
une tige qui est reliée au support de batterie dans un état dans lequel un espace est prévu entre la tige et une paroi avant (11A) de la batterie, et qui fixe la batterie sur le support de batterie ; et
**caractérisée par**
une partie d'inhibition d'interférence qui est prévue entre la tige et la paroi avant de la batterie, et qui empêche une interférence entre la batterie et la tige par la paroi avant de la batterie qui entre en contact avec la partie d'inhibition d'interférence quand une force d'inertie avant vers l'avant du véhicule agit sur la batterie,
dans laquelle la partie d'inhibition d'interférence est une pièce de contact (46) qui est soudée sur la tige, et
dans laquelle la paroi avant de la batterie peut venir en contact avec la pièce de contact.

8. Structure de montage de batterie selon la revendication 7,
dans laquelle la pièce de contact comprend une partie de surface de butée (50) avec laquelle la paroi avant de la batterie peut venir dans le contact, et une paire de parties de patte de montage qui supportent la partie de surface de butée, et dont des parties d'extrémité sont soudées sur la tige,
et dans laquelle un espace est prévu entre la partie de surface de butée et la tige.
